# EUROPEAN PATENT APPLICATION

(11) **EP 1 914 057 A1**
(43) Date of publication of application: **23.04.2008**
(21) Application number: 06122425.9
(22) Date of filing: 17.10.2006
(51) Int. Cl.: B29B 15/10, B29C 70/50

(54) **Method for manufacture of prepregs**

(71) Applicant: Inadco AB, 582 42 Linköping (SE); Svenska Tanso AB, 555 93 Jönköping (SE)
(72) Inventor: Kogager, Max, 582 42, LINKÖPING (SE); Vaara, Jan, 582 75, LINKÖPING (SE); Gregeman, Anders, 553 11, JÖNKÖPING (SE); Fransson, Sten, 554 46, JÖNKÖPING (SE)
(74) Representative: Norberg, Charlotte

(57) **Abstract**

The present invention relates to methods for manufacture of a prepreg for use in fibre laminate products. One manufacture method comprising the steps of provide fibres, producing a fabric sheet of said provided fibres, providing a plastic sheet and impregnating the fibres by pressing the fabric sheet against the plastic sheet. The method is characterized in that step c) includes providing a plastic sheet having a thickness such that the fibre volume of the prepreg becomes within the range 65 - 75 %. In an alternative method, the fibre content of the prepreg is up to 90% by volume.

## Description

### Technical Field of the Invention

The present invention relates to a method for manufacture of a prepreg for use in fibre laminate products, said manufacture comprising the steps of providing fibres, producing a sheet of said provided fibres, providing a plastic sheet and impregnating the fibres by pressing the fibre sheet against the plastic sheet.

The present invention further relates to a method for manufacture of a prepreg for use in fibre laminate products, **characterized in** that said manufacture only comprises the steps of providing fibres, coating the surface of at least a part of said fibres with a layer comprising plastic and producing said prepreg of the fibres.

### Description of Related Art

Fibre reinforced plastics are today normally produced in two major steps. In the first step, fibres are produced and in the second step these fibres are impregnated with plastics. Typical amount of fibres are today 50 - 60 % fibers by volume. These composite materials are today widely used in aircraft industry. The impregnated fibres in the fibre reinforced plastic can be arranged in one direction forming a so called prepreg tape. The impregnated fibres in the fibre reinforced plastic can also be arranged in two or more directions forming a so called prepreg fabric.

Thereinafter, the term prepreg will be used for the plastic impregnated fibres, including both the prepreg tapes and prepreg fabrics. These prepregs are often thin sheets. The thickness typically 0.1 - 0.4mm and the width of the sheets is typically from 5 - 1500mm.

To produce a final composite structure, two or more prepreg sheets (up to several hundreds of sheets) are placed on top of each other in different directions. Two or more prepreg sheets on top of each other are herein called an uncured fibre composite laminate.

The uncured fibre composite laminate is placed in an oven or in an autoclave. The temperature is raised and the plastic is cured (hardens) forming a cured laminate. Sometimes vacuum is applied in the curing process with or without the application of an external pressure.

The fibres are strong and their purpose is to carry applied load on a structure made of fibre composite materials. The purpose of the plastics is to bond the fibres together. Aircraft industries demands very light structures for environment reasons. Lighter structural weight means less fuel consumption. There would therefore be beneficial to increase the amount of fibres and reduce the amount of plastics. This has up to now been very difficult. Maximum fibre volume in today's fibre composite material is believed to be around 63 %.

In the so called "non bleeding systems" of today, the fibre content is approximately 55 - 60 % by volume. These systems are not bleeding out so much plastic (matrix) in the curing process, but the plastics can move along the fibres resulting in problems with uneven thicknesses in final structural composites parts.

Accordingly, today's "non bleeding system" has despite the name a tendency to bleed. The bleeding comes from the plastics near the edges of the fibre composite laminates. The result is often a laminate with thick parts in the middle and thin parts close to the edges. This phenomenon often rises a need to trim the edges of a final cured laminate. This leads to unwanted waste materials.

Today's composite parts have often complex shapes - for example U-beams. These U-beams are often produced starting with flat uncured laminates, placed on a male tool and formed to a U-shape (just one example) by means of an applied force or pressure. This practical and efficient production method has a drawback in that the applied force or pressure becomes uneven. The pressure on the radiuses is normally higher than the pressure on the web and flanges. When using the prepregs known today in curing the fibre composite laminates, the radius parts becomes typically thinner than the web and flanges. Further, the web and the flanges tend to get a curved, not wanted, outer surface.

Prior to and during the cure of a fibre composite laminate, it is necessary to suck or squeeze out air left in and between different prepreg sheets. To be able to suck or squeeze out the air, it is necessary to have air paths in the prepreg.
With a high amount of thermoset plastics in the laminate, an unwanted exothermic reaction can also occur during curing. In order to avoid exothermic reaction, a time consuming "dwell time" is applied during curing.

If pressure is applied to squeeze out plastics the fiber starts to form ring structures making it impossible for the plastics to bleed out then the fiber content reaches approximately 70 % by volume.

### Summary

One object of the present invention is to solve at least one of the problems mentioned above.

This has been achieved with method for manufacture of a prepreg for use in fibre laminate products, said manufacture comprising the steps of
a) providing fibres,
b) producing a sheet of said provided fibres,
c) providing a plastic sheet,
d) impregnating the fibres by pressing the fibre sheet against the plastic sheet, characterized in that step c) includes providing a plastic sheet having a thickness such that the fibre volume of the prepreg becomes within the range 65 - 75 %, preferably 70-75%.

The fibres are for example made of carbon, glass and/or aramide. The plastic sheet comprises for example a thermoset plastics or thermoplastics. Examples of thermoset plastics are epoxy, polyester, and vinylester plastics.

One advantage of the above described method is that it is possible to provide correct thicknesses of final composite parts made by the prepreg above. Further, the weight of the final composite part is reduced. In addition, bleeding is decreased during curing of the final composite part.

In one embodiment, step c) includes providing a plastic sheet wherein plastic content is somewhat lower in a centre area than in an outer area enclosing the centre area. Thereby, air paths are guaranteed in the prepreg so as to prevent trapped air in the final composite product.

In another embodiment the step of providing the fibres includes coating the fibres with a plastic layer.

The invention also relates to a cured composite article comprising at least two prepregs manufactured according to the above described method and arranged on top of each other, characterized in that a at least a part of the fibres form a plurality of walls enclosing at least a part of the plastic of the prepregs.

The fact that the flow of plastic is prevented by the walls formed by the fibres when the fibre content is 65-75% by volume, ensuring that the thickness of the final composite product is predictable and that bleeding is decreased.

The present invention also relates to a method for manufacture of a prepreg for use in fibre laminate products, characterized in that said manufacture only comprises the steps of
a) provide fibres
b) coat the surface of at least a part of said fibres with a layer comprising plastic and,
c) producing said prepreg of the fibres.

The step of impregnating the fibres with a plastic sheet has been completely omitted in this method, decreasing the production time, complexity and costs.

The amount of coating is preferably chosen such that the fibre content in the prepreg is 70-90% by volume. In a final composite product formed by prepregs manufactured according to this invention, the fibres do not form walls enclosing the plastic in the product, whereby the fibre content in the product can be increased to 70-90% by volume. Further, bleeding is minimized as the prepreg contains such high fibre content.

In one example the step a) of providing fibres comprises providing fibres having at least two different diameters. In another example, the fibres are made of at least two different materials.

The invention also relates to a method for producing a cured fibre laminate product characterized by the steps of
a) producing a lay-up comprising a plurality of prepregs provided according to the above,
b) sucking out solvent and gases from the lay-up,
c) curing the lay-up to the cured fibre laminate product.

### Brief Description of the Drawings

Fig 1 shows a cross section view of a Prior Art prepreg system.
Fig 2 shows a cross section view of a prepreg system according to one example of the invention.
Fig 3 shows the prepreg system of Fig 2 with a ring formation indicated.
Fig 4 shows a cross section view of a prepreg according to a second example of the present invention.
Fig 5 shows a cross-section view of the the prepreg in fig 4 cured.

### Detailed Description of Preferred Embodiments

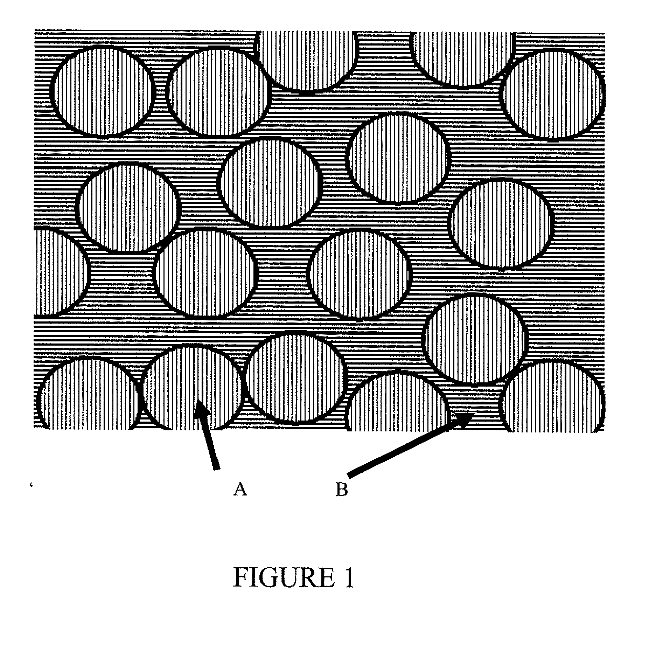

In Fig 1, a Prior art prepreg system comprises a number of fibers A arranged in a plastic material B forming a matrix. The fibres volume is normally under 63 % by volume for prepregs used in aircraft industries. The fibres are usually carbon fibres produced from a precursor made of PAN-plastics or pitch based plastics, wherein the precursor is heated up to high temperature so the plastics transforms to carbon fibers. The produced carbon fibers can then be covered with a protecting layer (not shown) of plastic matrix. This protecting layer is called "sizing of the fibers". The carbon fibers, with or without the protecting layer, are then normally rolled on a roll and shipped to a weaver or direct to prepreg industry. In the weaver, a fabric is weaved comprising the fibers, which fabric will thereafter be used in prepreg industry. The fabric comprises a plurality of fibres arranged substantially side by side to form a desired width (normally 5 - 1500mm). A laminate sheet, or prepreg, is then produced by pulling the fabric through rollers together with a thin sheet of uncured plastics (epoxy, polyester etc) so as to impregnate the fibres with plastic. The amount of fibres in the fabric and the thickness of the plastic sheet determine the fiber content - normally less than 63 % by volume.

Today's prepregs are heavy due to the fact that a high plastic content is required in order to enabling evacuation of air trapped inside the prepreg (laminate sheet) by so called matrix flow out of the laminate during cure of one or a plurality of laminate sheets to a final composite part. Further, it is difficult to provide correct thickness of the final composite product, due to the fact that it is very difficult to control the plastic, which in the curing process, is in a liquid state. If different pressures are provided on different parts of the final composite part in the curing process, an uneven thickness is provided.

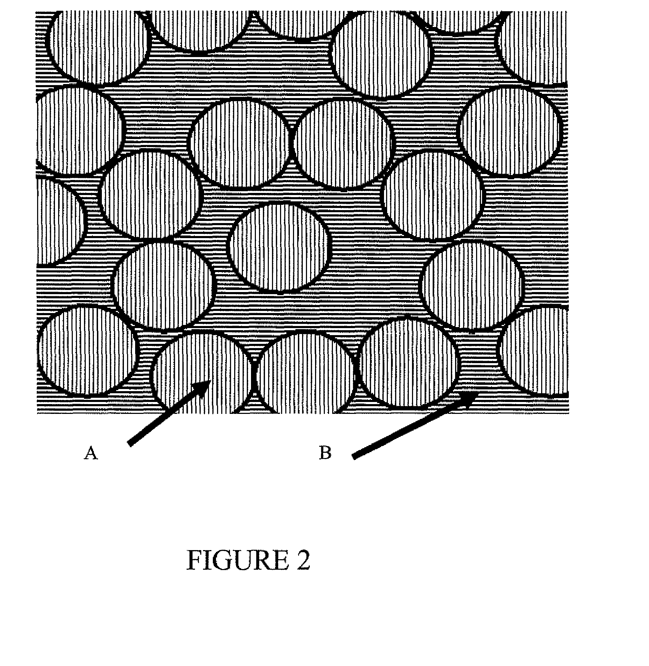

In the prepreg (or laminate sheet) of fig 2, the fibre volume is increased to between 65 - 75 % by volume. The fibres then form ring formations in the curing process, wherein a substantial part of the fibres are arranged in a plurality of ring formations. Each ring formation is formed such that a plurality of fibres form rings in a plane perpendicular to the length of the fibres. Thus, the rings, comprising fibres arranged side by side in close relation to each other, form walls enclosing plastic material trapped inside the walls in the curing process. Then ring formations are fully developed at approximately 75 % fibres by volume. With these ring formations, with 75% by volume of fibres and 25% by volume plastic matrix, almost no bleeding will occur. Most of the plastic matrix is enclosed within the fibre walls.

In order to provide prepregs, wherein the ring formations occur, the following process can in one example be followed.
1. Fibres are provided. In an example wherein the fibres are carbon fibres, they are for example produced from a precursor made of PAN-plastics or pitch based plastics, wherein the precursor is heated up to high temperature so the plastics transforms to carbon fibers.
2. The provided fibres can be covered with a protecting layer of plastic matrix in "sizing" the fibres".
3. The carbon fibers, with or without the protecting layer, are are arranged in one direction or weaved into a fabric, wherein the fibres are arranged in two or a plurality of directions. The fibres are arranged substantially side by side to form a desired width (normally 5 - 1500mm).
4. A prepreg, or laminate sheet is produced by pulling the fibres through rollers together with a thin sheet of uncured plastics (epoxy, polyester etc) so as to impregnate the fibres with plastic. The sheet of uncured plastic is thinner than on prior art methods so as to provide a prepreg with an increased fibre content of 65-75% by volume in the produced prepreg.

When the fibre content exceeds 65 % by volume, the fibres start to form ring structures. When the fibre volume reaches approximately 75 % by volume the ring formation is fully developed. A prepreg with approximate 75 % fibres by volume formed in ring structures will not allow the plastic material to bleed out. This means that the thickness of the prepreg laminate will be unaffected by uneven pressures on the laminate during curing. The result is that prepregs with the fibre content 65-75% by volume will provide for a possibility to produce a laminate with very accurate and robust thickness from said prepreg system. Accurate thickness is with today's prepreg systems not easy to obtain. So the use of the described prepreg provides for much more accurate tolerances for final composite parts. Accurate tolerances are very beneficial when different composite parts need to be assembled. The weight of final parts will be reduced compared with today's prepreg systems with approximately 3 - 8 %.

However, the impregnation of the prepreg will lead to a very dense prepreg. A very dens prepreg will not allow entrapped air to disappear during curing. This will lead to final parts with entrapped air - called porosities. This is undesirable in aircraft industry. In order to avoid porosities in final parts so called tailored prepreg can be used. In the tailored prepregs, the impregnation is controlled so that the middle part of every prepreg layer is provided with a slightly lower amount of plastic matrix material than the outer parts of each layer. This dryer part allows entrapped air to disappear during debulking and/or curing.

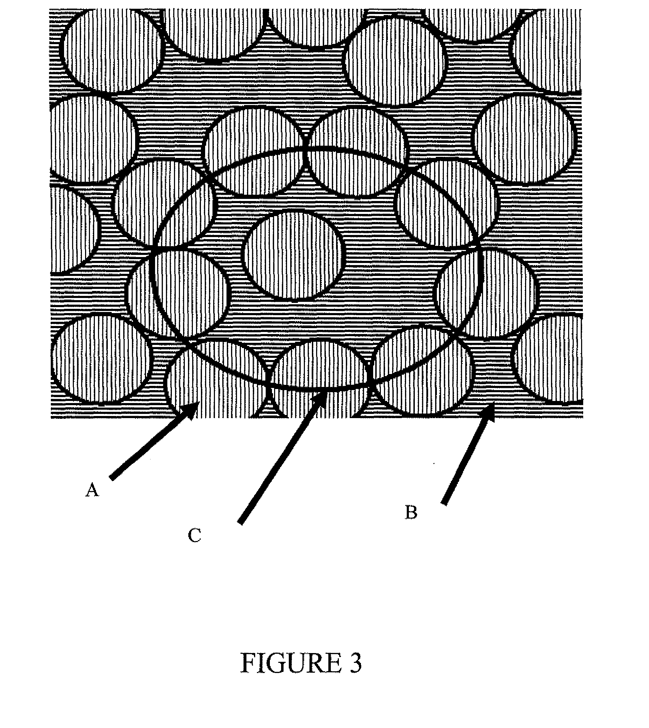

In Fig 3, reference C indicates a ring formation in the prepreg system.

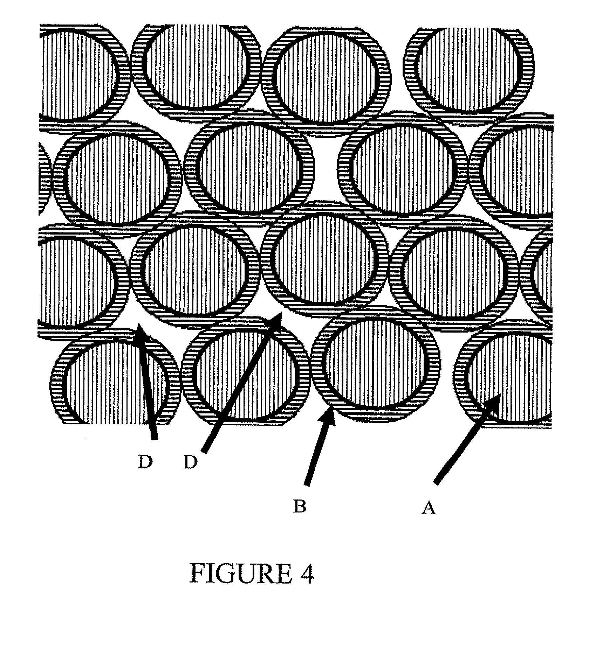

In fig 4, the surfaces of the fibres A of the prepreg fibres are provided with a thin layer of plastics B. As discussed above, the so called sizing process, wherein the fibres are coated with a plastic layer, is often performed in the same machine producing the fibers. The thickness of the plastic layer is chosen such that for each coated fibre, the volume relationship between fibre and plastic is the same as the desired volume relationship between fibre and plastics in the prepreg. Thus, the amount of plastics provided during the sizing of the fibre surface is increased in relation to the amount of plastics provided in prior art sizing processes. The prepregs can be produced direct in the fibre producing machine. The impregnation step, wherein a fabric of coated fibres are pulled through rollers with a plastic sheet is thereby omitted. Characteristically, in prepregs provided in accordance with this process, the fibre content is 70 - 90 % by volume. As the coated fibres are not impregnated with the plastic sheet there exist air channels D between the fibres. Further, the ring formations are not formed in curing a plurality of prepregs forming a fibre composite laminate. The absence of ring formations allows for the production of prepregs with a fibre content of at least up to 90%. This means that the weight of a final composite part can be even further reduced by approximately 6 - 15 % compared with today's prepreg.

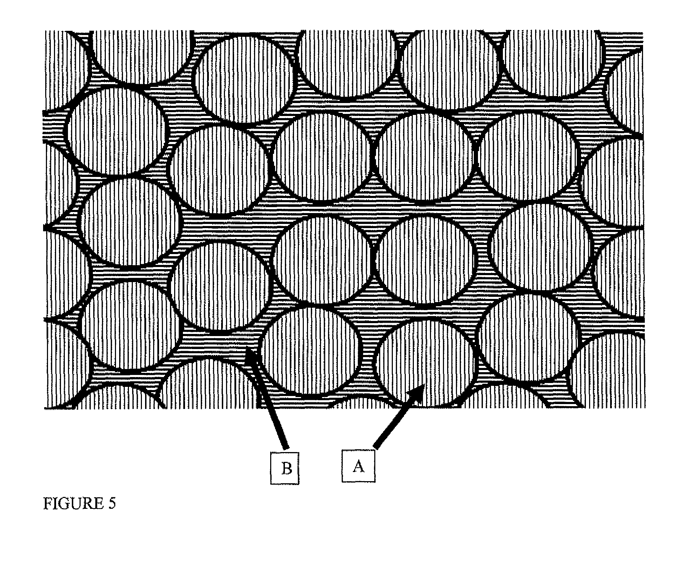

In Fig 5, the prepreg from figure 4 is cured, wherein an applied vacuum has sucked out all the air. Increased temperature makes the matrix (resin) fill up all the space between the fibers and a fiber volume of typically 70 - 90 % by volume can be reached. With this high fiber volume a real net resin system (no resin bleeding occurs) is created.

For an aircraft a severe weight reduction can mean a complete redesign of the aircraft. For example, a smaller/lighter fuel tank is needed and the landing gear can be designed slimmer and lighter. This in turn means that the wings do not need to carry so high loads, and can therefore be slimmer - and so on. The carousel and redesign effect can lead to a reduction of approximately 7 - 35 % of the weight for an aircraft.

The prepreg produced without the impregnation step can be used to produce composite parts such as flat panels, L-profiles, U-profiles, Z-profiles, beams with joggling steps and trumpet shapes, composite parts with thickness variation, and curved and bended composite structures, all with correct thicknesses.

Because the fibres are closely packed in the prepregs described in relation to Figs 2-4, bending forces on the fibres are reduced and this can lead to higher energy absorption at impact.

Because the amount of plastic material is reduced in the prepregs described in relation to Figures 2-4, the value of the Coefficient of Thermal Expansion (CTE) will be reduced traverse the fibre direction. With a reduced value of CTE, the interlaminar forces (forces between different sheets of a prepreg) will be reduced.

## Claims

1. A method for manufacture of a prepreg for use in fibre laminate products, said manufacture comprising the steps of
a) providing fibres,
b) producing a sheet of said provided fibres,
c) providing a plastic sheet,
d) impregnating the fibres by pressing the fibre sheet against the plastic sheet, **characterized in that** step c) includes providing a plastic sheet having a thickness such that the fibre volume of the prepreg becomes within the range 65 - 75%.

2. A method according to claim 1, **characterized in that** the fibre volume of the prepreg is within the range 70 - 75%.

3. A method according to claim 1 or 2, **characterized in that** step c) includes providing a plastic sheet wherein the amount of plastic is lower in a centre area than in an outer area enclosing the centre area.

4. A method according to claim 1, **characterized in that** the step of providing the fibres includes coating the fibres with a plastic layer.

5. A cured composite article comprising at least two prepregs manufactured according to any of the claims 1-4 and arranged on top of each other, **characterized in that** a at least a part of the fibres form a plurality of walls enclosing at least a part of the plastic of the prepregs.

6. A method for manufacture of a prepreg for use in fibre laminate products, **characterized in that** said manufacture only comprises the steps of
a) provide fibres
b) coat the surface of at least a part of said fibres with a layer comprising plastic and,
c) producing said prepreg of the fibres.

7. A method according to claim 6, **characterized in that** the amount of coating is chosen such that the fibre content in the prepreg is 70-90% by volume.

8. A method according to claim 6, **characterized in that** the step a) of providing fibres comprises providing fibres having at least two different diameters.

9. A method according to claim 6, **characterized in that** the fibres are made of at least two different materials.

10. A method for producing a cured fibre laminate product **characterized by the** steps of
a) producing a lay-up comprising a plurality of prepregs provided according to any of the claims 3, 6, 7, 8 or 9,
b) sucking out solvent and/or gases from the lay-up,
c) curing the lay-up to the cured fibre laminate product.
